# EUROPÄISCHE PATENTSCHRIFT

(11) **EP 2 303 449 B1**
(45) Veröffentlichungstag und Bekanntmachung des Hinweises auf die Patenterteilung: **27.02.2019**
(21) Anmeldenummer: 09777269.3
(22) Anmeldetag: 17.07.2009
(51) Int. Cl.: B01J 19/00, C10J 3/48, C10J 3/72, C10J 3/76

(54) **VERFAHREN UND ANLAGE ZUR KÜHLUNG VON VERGASUNGSBRENNERN**
PROCESS AND UNIT FOR COOLING GASIFICATION BURNERS
PROCÉDÉ ET INSTALLATION POUR REFROIDIR DES BRÛLEURS DE GAZOGÈNES.

(30) Priorität: 24.07.2008 DE 102008034734
(43) Veröffentlichungstag der Anmeldung: 06.04.2011
(73) Patentinhaber: thyssenkrupp Industrial Solutions AG, 45143 Essen (DE)
(72) Erfinder: DOSTAL, Johannes, 44137 Dortmund (DE); KUSKE, Eberhard, 59494 Soest (DE)
(74) Vertreter: Brosch, Oliver
(86) Internationale Anmeldenummer: PCT/EP2009/005214
(87) Internationale Veröffentlichungsnummer: WO 2010/009842

(56) Entgegenhaltungen:
- WO-A1-2008/110592
- DE-A1- 2 038 597
- DE-A1- 2 342 079
- DE-A1- 2 352 078
- DE-A1- 2 554 666
- DE-A1- 3 103 721
- FR-A- 928 646
- US-A- 4 666 463
- US-A- 4 743 194
- US-A- 6 162 266

## Beschreibung

Die Erfindung richtet sich auf ein Verfahren zur Kühlung von hochtemperaturbelasteten Aggregaten in gekühlten Reaktoren zur Vergasung kohlenstoffhaltiger Brennstoffe mit sauerstoffhaltigen Vergasungsmitteln, wobei die Reaktorwände über einen Kühlmittelkreislauf gekühlt werden.

Vergasungsprozesse in entsprechenden Reaktoren laufen bei hohen Temperaturen ab. Um die Umgebung vor dem Austreten der Wärmeströme zu schützen, ist es bekannt, die Reaktorwände durch ein entsprechendes Hauptkühlsystem zu kühlen. Da Einauten in den Reaktoren vorgesehen sind, gilt es, diese ebenfalls entsprechend zu kühlen und auf ein Temperaturniveau einzustellen, womit eine hohe Lebensdauer dieser Teile erreicht wird. Dabei kann es sich beispielsweise um Vergaser, Brenner od. dgl. handeln.

Aus der EP 0 986 622 B1 ist es bekannt, einen in den Vergaser ragenden Brenner über einen eigenen Kühlkreislauf zu kühlen, wobei das aus einem Vorlagergefäß stammende Kühlmittel nach Kühlen des Brenners und entsprechender Wärmeabgabe über einen Wärmetauscher dem Vorlagegefäß wieder zugeführt wird. An dem Vorlagegefäß ist eine Zufuhrleitung für Stickstoff ebenso vorhanden wie ein Auslass zur Fackel, der über eine Druckregelung mit dem Vergaser verbunden ist. Der Zustand im Vorlagegefäß wird ebenfalls erfasst und geregelt. Ein Nachteil der bekannten Verfahrensweise besteht darin, dass bei einer Leckage nicht nur CO oder H₂ in den Kühlkreislauf eintreten kann, sondern auch andere Komponenten, die in dem erzeugten Gas vorhanden sind, wie z.B. Salze, Schwefelwasserstoff und andere Elemente, die zu großen Schwierigkeiten im Kühlkreislauf führen können. So können beispielsweise Partikel die Leitungen blockieren oder zu Abrasionen führen, Chloride können die Korrosion fördern u. dgl. mehr.

US 4743194 A und US 6162266 A offenbaren ein Verfahren und eine Anlage zur Kühlung von Vergasungsbrennern mit einer Leckagemeldung. DE 2038597 A offenbart eine Vorrichtung zur Kühlung von Brennern an Kalkschachtöfen. US 4666463 A und WO 2008/110592 A1 offenbaren Vergasungsreaktoren mit Kühlkreisläufe zur Kühlung der Brenner.

Hier setzt die Erfindung an, deren Ziel darin besteht, ein entsprechendes Kühlverfahren vorzusehen, das mit Sicherheit das Eindringen derartiger Substanzen in den Kühlkreislauf verhindert.

Diese Aufgabe wird durch ein Verfahren gemäß Anspruch 1 und eine Anlage gemäß Anspruch 3 gelöst, wobei die zu kühlenden Aggregate, wie Vergasungsbrenner, Brennermuffeln, mit einem eigenen Kühlkreislauf ausgerüstet sind, wobei dieser Kühlkreislauf mit dem Hauptkühlkreislauf unmittelbar verbunden ist.
Mit der Erfindung wird eine Reihe von Vorteilen erreicht, insbesondere ist es möglich, das Druckniveau des Hauptkühlkreislaufes unmittelbar auf den oder die Sekundärkühlkreisläufe aufzuprägen, wobei die Erfindung hierzu vorsieht, dass der jeweilige Aggregatkühlkreislauf auf dem Druckniveau des Hauptkühlkreislaufes betrieben wird.

Dabei ist vorgesehen, dass der Aggregatkühlkreislauf wirkmäßig mit dem Ausgleichgefäß (Dampftrommel) des Hauptkühlsystems verbunden ist.

Bei Flüssigkeitsverlust im Aggregatkühlkreislauf wird ein Nachspeisen aus dem Hauptkühlkreislauf vorgenommen. Tritt eine Leckage im Aggregatkühlkreislauf auf, wird die dann einsetzende Nachspeisung aus dem Hauptkühlkreislauf sofort als Signal gewertet, das eine Leckagemeldung auslöst.

Eine Einstellung der Temperatur des Kühlmediums im Aggregatkühlkreislauf kann dadurch erfolgen, dass ein indirekter Wärmetausch mit Speise- und Kesselwasser und/oder durch Mischungen mit Speise- und Kesselwasser erfolgt, wie dies die Erfindung ebenfalls vorsieht.

Zur Durchführung der erfindungsgemäßen Verfahrensweise und zur Lösung der eingangs formulierten Aufgabe sieht die Erfindung auch eine Anlage nach Anspruch 3 mit einem Hauptkühlkreislauf für den Reaktor zur Vergasung kohlenstoffhaltiger Brennstoffe und mit einer in den Kühlkreislauf integrierten Dampftrommel vor, die sich auszeichnet durch einen oder mehrere Aggregatkühlkreisläufe zum Kühlen von dem Reaktor zugeordneten Aggregaten, d.h., Vergasungsbrennern, wobei der Aggregatkühlkreislauf wirkmäßig mit der Dampftrommel des Hauptkreislaufes derart verbunden ist, dass das Druckniveau des Hauptkreislaufes auch im Aggregtkühlkreislauf herrscht.

In einer Verbindungsleitung zwischen dem Aggregatkühlkreislauf und dem Hauptkühlkreislauf ist eine Leckageüberwachung vorgesehen.

Weitere Merkmale, Einzelheiten und Vorteile der Erfindung ergeben sich aufgrund der nachfolgenden Beschreibung sowie anhand der Zeichnung. Diese zeigt in
- Fig. 1: eine prinzipielle Schaltung der erfindungsgemäßen Anlage sowie in
- Fig. 2: eine Schaltungsvariante der erfindungsgemäßen Anlage.

Zunächst sei angemerkt, dass die in den Figuren wiedergegebene Anlage ein System zur Kühlung bzw. Temperierung stark temperaturbelasteter Flächen, z.B. der Brenner eines gekühlten Reaktors zur Vergasung feinzerteilter, flüssiger oder fester Brennstoffe mit sauerstoffhaltigen Vergasungsmitteln betrifft, die bei Temperaturen oberhalb des Schlakkeschmelzpunktes in Bereichen von 1200 bis 2000°C arbeiten, wobei der Druck 0,3 bis 8 MPa beträgt mit einem oder mehreren Brennern und einer oder mehreren Brennerebenen, wobei der entsprechende Reaktor in den Figuren nicht gesondert wiedergegeben ist, lediglich Ein- und Austritt zu den gekühlten Membranflächen.

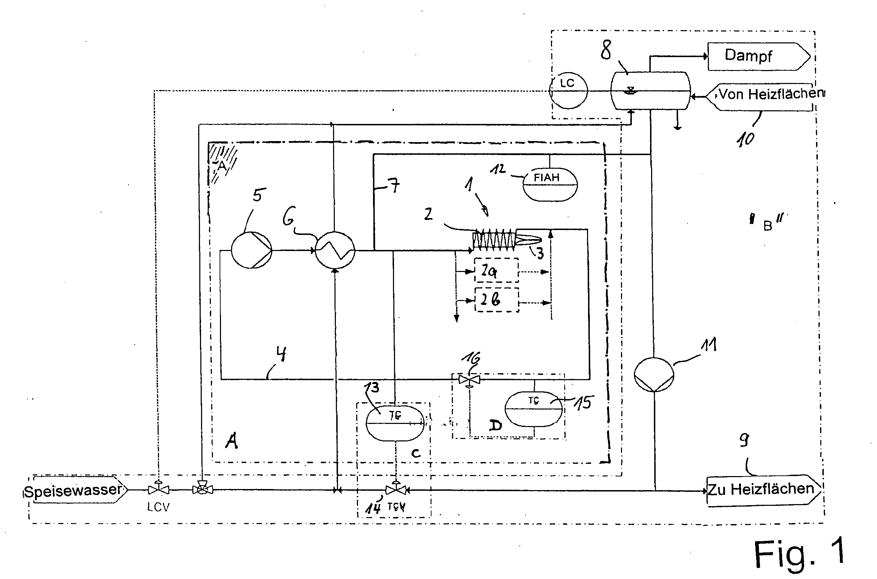

Im in Fig. 1 dargestellten Beispiel ist strichpunktiert eingerahmt und mit "A" bezeichnet ein Aggregatkühlkreislauf, z.B. zur Kühlung eines mit 1 bezeichneten Vergasungsbrenners mit Brennerkopf 3, über der entsprechenden Kühlfläche 2 dargestellt, wobei weitere zu kühlende Aggregate vorgesehen sein können, die entsprechenden Kühlflächen sind in der Zeichnung mit 2a und 2b bezeichnet. Das Kühlmittel des Aggregatkühlkreislaufes wird im Kreislauf über eine Leitung 4 geführt, von der Kühlfläche 2 mittels einer Pumpe 5 über einen mit 6 bezeichneten Wärmetauscher zurück in die Kühlfläche 2.

Über eine Verbindungsleitung 7 ist der Aggregatkühlkreislauf mit der Dampftrommel 8 des mit "B" bezeichneten Hauptkühlkreislaufes geführt, wobei der Einlauf in die Kühlfläche des Hauptkühlkreislaufes mit 9 bezeichnet ist, der Rücklauf zur Dampftrommel 8 mit 10, die Kesselwasserumwälzpumpe des Hauptkühlkreislaufes "B" trägt das Bezugszeichen 11. Im Aggregatkühlkreislauf von der Verbindungsleitung 7 zur Dampftrommel 8 ist eine Leckageüberwachung, mit 12 bezeichnet, vorgesehen. Fällt z.B. der Druck im Aggregatkühlkreislauf "A", wird aus dem Hauptkühlkreislauf Kühlmittel selbsttätig zugeführt und ein Leckagealarm ausgelöst.

In Fig. 1 sind zwei Temperaturkontrollsysteme "C" und "D" dargestellt, die einzeln oder kombiniert eingesetzt werden können. Das Kontrollsystem "C" besteht aus einem TC-Glied 13 sowie einem Zumischventil 14.

Gegen Sieden im Rücklauf aus den Heiz- bzw. Kühlflächen des Aggregatkühlsystemes kann die Regelung "D" vorgesehen sein, die ebenfalls aus einem TC-Glied 15 besteht und einem Ventil 16.

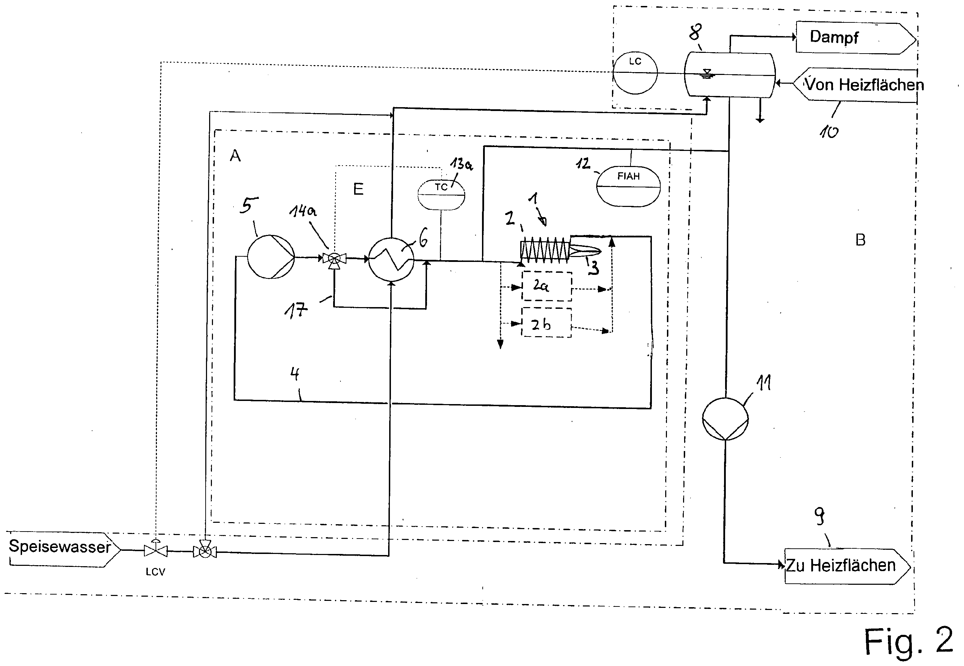

Fig. 2 zeigt eine Schaltungsvariante, wobei alle identischen Anlageteile das gleiche Bezugszeichen wie in Fig. 1 tragen, ggf. um den Buchstaben "a" ergänzt.

Anders als in Fig. 1 wiedergegeben wird hier ein neues Temperaturkontrollsystem "E" eingeführt mit einem entsprechenden TC-Glied 13a und einem Zumischventil 14a, das eine den Wärmetauscher 6 umgehende Bypassleitung 17 beaufschlagt. Erkennbar kann durch diese Bypassführung eine entsprechende Temperaturregelung vorgenommen werden.

Natürlich sind die beschriebenen Ausführungsbeispiele der Erfindung noch in vielfacher Hinsicht abzuändern, ohne den Grundgedanken zu verlassen.

## Patentansprüche

1. Verfahren zur Kühlung von hochtemperaturbelasteten Aggregaten, nämlich von Vergasungsbrennern oder Brennermuffeln, in gekühlten Reaktoren zur Vergasung kohlenstoffhaltiger Brennstoffe mit sauerstoffhaltigen Vergasungsmitteln, wobei die Reaktorwände über einen Hauptkühlkreislauf gekühlt werden, **dadurch gekennzeichnet, dass**
- die zu kühlenden Aggregate, mit einem eigenen Kühlkreislauf ausgerüstet sind, wobei dieser Aggregatkühlkreislauf mit dem Hauptkühlkreislauf unmittelbar verbunden ist,
- der Aggregatkühlkreislauf auf dem Druckniveau des Hauptkühlkreislaufes betrieben wird, und
- der Aggregatkühlkreislauf wirkmäßig mit dem Ausgleichgefäß, z.B. mit einer Dampftrommel, des Hauptkühlsystems verbunden ist,
- bei Flüssigkeitsverlust im Aggregatkühlkreislauf ein Nachspeisen aus dem Hauptkühlkreislauf vorgenommen wird,
- bei Zuspeisen von Kühlmedium in den Aggregatkühlkreislauf eine Leckagemeldung ausgelöst wird.

2. Verfahren nach Anspruch 1, **dadurch gekennzeichnet, dass** die Temperatur des Kühlmediums im Aggregatkühlkreislauf durch indirekten Wärmetausch mit Speise- und Kesselwasser und/oder durch Mischungen mit Speise- und Kesselwasser eingestellt wird.

3. Anlage zur Durchführung des Verfahrens nach einem der vorangehenden Ansprüche mit einem Hauptkühlkreislauf für den Reaktor zur Vergasung kohlenstoffhaltiger Brennstoffe mit einer in den Kühlkreislauf integrierten Dampftrommel, **gekennzeichnet durch** einen oder mehrere Aggregatkühlkreisläufe (A) zum Kühlen von dem Reaktor zugeordneten Vergasungsbrennern (2), wobei der Brennerkühlkreislauf (A) wirkmäßig mit der Dampftrommel (8) des Hauptkühlkreislaufes (B) derart verbunden ist, dass das Druckniveau des Hauptkühlkreislaufes (B) auch im Brennerkühlkreislauf (A) herrscht, wobei in einer Verbindungsleitung (7) zwischen dem Brennerkühlkreislauf (A) und dem Hauptkühlkreislauf (B) eine Leckageüberwachung (12) vorgesehen ist.

4. Anlage nach Anspruch 3, **dadurch gekennzeichnet, dass** im Brennerkühlkreislauf (A) ein Wärmetauscher (6) zur Aufnahme der Wärme aus dem Brennerkreislauf (A) mit Beaufschlagung der Dampftrommel (8) vorgesehen ist.

## Claims

1. Method for cooling assemblies which are loaded with high temperatures, namely gasification burners or burner throats, in cooled reactors for the gasification of carbon-containing fuels with oxygen-containing gasification agents, the reactor walls being cooled via a main cooling circuit, **characterized in that**
- the assemblies to be cooled are equipped with a dedicated cooling circuit, the said assembly cooling circuit being connected directly to the main cooling circuit,
- the assembly cooling circuit is operated at the pressure level of the main cooling circuit, and
- the assembly cooling circuit is operatively connected to the equalizing vessel, for example to a steam drum, of the main cooling system,
- replenishing from the main cooling circuit is performed in the event of a loss of liquid in the assembly cooling circuit, and
- a leakage notification is triggered in the event of cooling medium being fed into the assembly cooling circuit.

2. Method according to Claim 1, **characterized in that** the temperature of the cooling medium in the assembly cooling circuit is set by the way of indirect heat exchange with feed and boiler water and/or by way of mixing operations with feed and boiler water.

3. System for carrying out the method according to one of the preceding claims having a main cooling circuit for the reactor for the gasification of carbon-containing fuels with a steam drum which is integrated into the cooling circuit, **characterized by** one or more assembly cooling circuits (A) for cooling gasification burners (2) which are assigned to the reactor, the burner cooling circuit (A) being operatively connected to the steam drum (8) of the main cooling circuit (B) in such a way that the pressure level of the main cooling circuit (B) also prevails in the burner cooling circuit (A), a leakage monitoring means (12) being provided in a connecting line (7) between the burner cooling circuit (A) and the main cooling circuit (B).

4. System according to Claim 3, **characterized in that** a heat exchanger (6) for absorbing the heat from the burner circuit (A) with loading of the steam drum (8) is provided in the burner cooling circuit (A).

## Revendications

1. Procédé de refroidissement d'unités chargées à haute température, à savoir de brûleurs de gazéification ou de moufles de brûleur, dans des réacteurs refroidis destinés à la gazéification de combustibles carbonés avec des agents de gazéification oxygénés, les parois du réacteur étant refroidies par un circuit de refroidissement principal, **caractérisé en ce que**
- les unités à refroidir sont équipées de leur propre circuit de refroidissement, ce circuit de refroidissement d'unités étant directement raccordé au circuit de refroidissement principal,
- le circuit de refroidissement d'unités est utilisé au niveau de pression du circuit de refroidissement principal, et
- le circuit de refroidissement d'unités est raccordé fonctionnellement au récipient d'expansion, par exemple à un tambour à vapeur, du système de refroidissement principal,
- en cas de perte de fluide dans le circuit de refroidissement d'unités, une alimentation secondaire est effectuée depuis le circuit de refroidissement principal,
- lorsque le circuit de refroidissement d'unités est alimenté en milieu de refroidissement, un message de fuite est déclenché.

2. Procédé selon la revendication 1, **caractérisé en ce que** la température du milieu de refroidissement dans le circuit de refroidissement d'unités est ajustée par échange de chaleur indirect avec de l'eau d'alimentation et de chaudière et/ou par mélange avec de l'eau d'alimentation et de chaudière.

3. Installation destinée à la mise en oeuvre du procédé selon l'une des revendications précédentes, comprenant un circuit de refroidissement principal destiné au réacteur de gazéification de combustibles carbonés comportant un tambour à vapeur incorporé dans le circuit de refroidissement, **caractérisée par** au moins un circuit de refroidissement d'unités (A) destiné au refroidissement de brûleurs de gazéification (2) associés au réacteur, le circuit de refroidissement de brûleurs (A) étant raccordé fonctionnellement au tambour à vapeur (8) du circuit de refroidissement principal (B) de sorte que le niveau de pression du circuit de refroidissement principal (B) règne également dans le circuit de refroidissement de brûleurs (A), une surveillance de fuites (12) étant prévue dans un conduit de raccordement (7) entre le circuit de refroidissement de brûleurs (A) et le circuit de refroidissement principal (B).

4. Installation selon la revendication 3, **caractérisée en ce qu'**un échangeur de chaleur (6), destiné à absorber la chaleur provenant du circuit de brûleurs (A) par alimentation du tambour à vapeur (8), est prévu dans le circuit de refroidissement de brûleurs (A).
